# EUROPEAN PATENT APPLICATION

(11) **EP 4 253 819 A1**
(43) Date of publication of application: **04.10.2023**
(21) Application number: 23163982.4
(22) Date of filing: 24.03.2023
(51) Int. Cl.: F16L 55/165, B29C 63/00, B29C 63/36, B29C 35/08

(54) **METHOD, KIT AND COMPOSITION FOR NON-DESTRUCTIVE IN SITU REPAIR (RELINING) OF DETERIORATED PIPELINES WITH A DUAL USE SYSTEM**

(30) Priority: 01.04.2022 IT 202200006491
(71) Applicant: Applied Resin S.L., 28039 Madrid (ES)
(72) Inventor: PIOVANO, Roberto, 10081 Castellamonte (IT)
(74) Representative: Karaghiosoff, Giorgio Alessandro

(57) **Abstract**

The invention relates to a method for relining a pipeline using a composition comprising:
a) at least one resin crosslinkable by the action of a photoinitiator which can be activated with actinic light,
b) at least one resin which can stay inert or be cross-linked by the action of a co-hardening booster
c) at least one photoinitiator compound which is photoactivatable by irradiation with an actinic light source;
d) and at least one booster/co-hardener compound which at the same time also acts as a crosslinker of the inert resin to increase the overall mechanical, thermal and chemical strengths of the system.

The invention also relates to a kit for relining a pipeline according to said method, comprising:
- a first container comprising a), b) and c);
- a second container comprising d) which can optionally be used;
- a substrate suitable for being impregnated both with the composition of the first container alone and optionally also with the composition resulting from mixing the contents of the first container with the contents of the second container; and optionally
- an actinic light source and an adjustable pressure air flow generator.

## Description

### TECHNICAL FIELD

The present invention relates to a method for relining a pipeline which uses a composition comprising at least one resin crosslinkable by the action of a photoinitiator which can be activated with actinic light and at least one resin crosslinkable by the action of at least one booster/co-hardener compound. The present invention also relates to a kit comprising said composition.

### STATE OF THE ART

In recent years, the sector of "relining" and the so-called "CIPP" (*Cured in place Pipe*)*,* i.e. the non-destructive rehabilitation/repair, *in situ,* of damaged pipes, downspouts, ducts or water pipes, has aroused more and more interest as it allows to carry out rehabilitation/repair interventions on worn and/or damaged water networks without having to completely replace the line involved. This possibility is therefore particularly attractive in the case of minor damages where the damage to the water network is not caused by serious structural failures but rather by the much more common infiltrations or micro-fractures, thus allowing considerable savings from a socio-economic point of view, effectively reducing the cost of the operator's intervention in terms of materials, time and safety but also the inconvenience necessarily caused to citizens by the demolition and reconstruction of roads and buildings.

In the current state of the art, systems are known which provide for the insertion inside the conduit of interest, of a sheath, called "sleeving", generally composed of a thermoplastic and flexible polymeric support (for instance polyolefin or polyester polyurethane) reinforced with fabric, non-woven fabric or felt of polyester or mixed glass, impregnated with various types of hardening compositions. Once inserted, the sheath is made to adhere mechanically to the internal surfaces of the pipeline by means of the action of the air pressure blown in by a special machine until, due to the cross-linking (and therefore hardening) effect of the resin composition, the impregnated sheath acquires sufficient rigidity to remain positioned and consolidated on site and to make it possible to put the pipeline back into service.

However, these systems have countless disadvantages connected to the complexity of the equipment to be brought on site, to the energy cost necessary for the activation of the hardening compositions and/or to the long duration of the operation. In fact, in the case of resins that are activated with hot water, it is necessary to heat large volumes of water and keep them at temperature for a few hours, while in the case of resins that are activated at room temperature, it is necessary to wait several hours before the impregnated sheath achieve sufficient stiffness.

To overcome these problems, types of hardening compositions have been developed which can be photoactivated (i.e. photocrosslinkable) by irradiation with actinic light, so as to allow stiffening of the impregnated sheath in a short time and without having to heat and maintain large volumes of water.

Even in this case, however, there are numerous disadvantages, in particular the exclusively photocrosslinking resin compositions generally have various defects, they generate a large amount of exothermic heat during the cross-linking which takes place in a few minutes with the irradiation of actinic light and determines a definitely high temperature inside the pipe which leads up to the thermal peak reached by the mass undergoing cross-linking. This often leads to deformation of the substrate when it is sensitive to excessive heat, such as pipes made of plastic material such as PVC, polypropylene and other materials that deform at relatively low temperatures.

Another big problem not solved in the prior art concerns the shrinkage of the binding resin during crosslinking, this drawback is particularly accentuated with the use of completely photocrosslinkable compositions which generally have a high linear and volumetric shrinkage value during crosslinking.

This generates serious drawbacks on long spans to be rehabilitated which would be afflicted by a high linear shrinkage, and generates problems of imperfect adhesion between the stiffened impregnated sheath and the pre-existing pipe, creating an interstitial space at the risk of causing liquid leaks during future operation of the rehabilitated pipeline.

Another problem that often occurs is linked to the fact that, in some particular situations, it is difficult to uniformly irradiate the entire impregnated sheath inside the pipe with the actinic light, particularly in the case of particularly long, dirty pipes or those with sharp bends or other irregularities. In this case, in fact, there are so-called "shadow areas" not reached by the UV light (and in fact not crosslinkable efficiently or crosslinkable with insufficient crosslinking depth), which inevitably affect the overall performance of the repair .

Another limitation of the prior art consists in the fact that with UV cross-linking systems it is often not possible to reach important mechanical characteristics and high chemical resistances of the manufactured article guaranteed with uniformity in every part of the manufactured article, this, always, because mainly the chemical resistance is strongly influenced by under-crosslinked areas which can be created with imperfect and non uniform exposure to light radiation.

Therefore, the need remains in the sector to make available a composition that allows for effective performance to be achieved even in the case of pipelines that present shaded areas or curved or irregular angular morphologies, which exhibit little or no volumetric and linear shrinkage, that produces a product that fits perfectly with the old pipeline and exhibits a limited thermal peak to avoid deformation of the heat-sensitive pipes.

The present invention solves the critical issues of the known art by making available a method, the relative kit and a composition for the relining of deteriorated pipelines.

According to a first embodiment, this method and this kit comprise the use of a composition comprising at least one resin crosslinkable by the action of a photoinitiator which can be activated with actinic light and at least one non-photocrosslinking resin with the function of reducing the thermal peak of the system, substantially the volumetric shrinkage after curing, and at the same time showing thermomechanical and chemical strengths adequate to the rehabilitation and/or *in situ* non-destructive repair of pipelines and which composition further exhibits, optionally when blended with a booster and/or a co-hardener, the function of further increasing the cross-linking density with an increase in the mechanical, thermal and chemical resistance of the system when higher thermomechanical and chemical resistances are required (for instance when the pipeline to be rehabilitated is intended to contain aggressive fluids other than water or liquids at high temperatures).

Furthermore, when one chooses to add the booster and/or co-hardener, thanks to the different modes of action of the two compounds, i.e. the one consisting of the sole combination of at least one crosslinkable resin by the action of a photoinitiator that can be activated with actinic light and at least one non-photocrosslinking resin with the function of reducing the thermal peak of the system and that which further includes said booster and/or co-hardener, the non-destructive *in situ* rehabilitation and/or repair of pipelines is obtained with the going on of the crosslinking even when the source of actinic light ceases to obtain maximum mechanical and chemical resistance of the product.

Thanks to the characteristics highlighted above in a general way and to those deriving from the further embodiments object of the following description and of the claims, the invention offers a versatile system which can be indifferently applied as a single component impregnating composition with low thermal peak, low or zero shrinkage and chemical thermomechanical characteristics sufficient for use in relining interventions, while when greater performance is required it can be used with the booster, transforming into a system with two separate components, with a reduction in the useful life of the already impregnated sheath, but with enhanced thermomechanical and chemical resistance properties while maintaining the advantages of lower shrinkage and limited thermal peak.

### SUMMARY OF THE INVENTION

The present invention relates to a method for the non-destructive *in situ* rehabilitation and/or repair of a pipeline comprising the steps of:
i) making available a composition, which can be used to obtain standard resistances comprising:
   a) at least one resin selected from the group comprising an acrylic, methacrylic, unsaturated polyester resin, polyester (meth)acrylate, epoxy (meth)acrylate, polyurea (meth)acrylate, bisphenol (meth)acrylate, vinyl, vinylester, vinylether, polyether (meth)acrylate resin and a combination thereof;
   b) at least one resin selected from the group comprising an epoxy, oxirane, oxetane, cycloaliphatic epoxy resin and a combination thereof;
   c) at least one photoinitiator compound, which can be photoactivated by irradiation with an actinic light source having a wavelength between 100 and 600 nm;
ii)providing higher mechanical and/or chemical strength than the said first predetermined basic level of mechanical and/or chemical strength is required the method further comprising the step of adding to the composition of step i):
   d) at least one booster/co-hardener compound selected from the group comprising a semi-latent co-hardener, a room temperature co-hardener and a combination thereof, whose cross-linking action does not depend on the presence and/or persistence of irradiation with an actinic light source having a wavelength between 100 and 600 nm;
iii) impregnating a substrate with the composition of said step i) and when it is sufficient to obtain said first pre-established basic level of the mechanical and/or chemical resistances, said basic level having the mechanical and/or chemical characteristics of the composition of step ii) subjected to photo-crosslinking and being lower than a second pre-established maximum level of said mechanical and/or chemical resistance;
iv) impregnating a substrate with the composition of step ii) when it is necessary to obtain said second level of said mechanical and/or chemical resistances by action of the booster;
v) inserting the impregnated substrate inside the pipeline to be rehabilitated and/or repaired;
vi) expanding or extruding, preferably by means of the inversion technique, said substrate on the internal surfaces of the pipeline by applying an air flow;
vii) activating the at least one photoinitiator comprised in the composition by irradiation with an actinic light source having a wavelength between 100 and 600 nm;
viii) removing the air flow application, preferably after a waiting time between 1 and 60 minutes.

The present invention also relates to a kit for the non-destructive *in situ* rehabilitation and/or repair of a pipeline according to said method, comprising:
- a first container comprising the composition of step i);
- a second container comprising the at least one booster/co-hardener compound d) as described in said step ii);
- a substrate suitable for being impregnated with a composition as described in said step iii) and suitable for insertion inside a pipeline to be rehabilitated and/or repaired; said composition can result from mixing the contents of the first container with the contents of the second container; and eventually
- an actinic light source having a wavelength between 100 and 600 nm and an air flow generator with adjustable pressure.

### BRIEF DESCRIPTION OF THE FIGURES

Figures 1.1 to 1.4 show pictures of sample exA made according to the present invention and which show the perfect adherence between the surfaces of the hardened sheath and the pipe to be rehabilitated;
Figures 2.1 to 2.3 show the pictures of the sample exB made according to the prior art and which highlight the detachment due to the shrinkage of the sheath after hardening.

### DETAILED DESCRIPTION

For the purposes of the present invention, the term "actinic light" or "actinic radiation" indicates an electromagnetic radiation having a wavelength between 100 and 600 nm.

By "broad-spectrum UV lamp" is meant, for the purposes of the present invention, a lamp which emits electromagnetic radiation having a wavelength greater than 200 nm, preferably between 200 and 650 nm.

For the purposes of the present invention, "UV LED" means a light emitting diode in the wavelength range between 300 and 600 nm.

By "(photo)activable with/by actinic light" is meant, for the purposes of the present invention, a composition which, following irradiation with an actinic light source, crosslinks thus becoming a "photocrosslinked polymeric composition".

For the purposes of the present invention, therefore, the aforementioned "(photo)activable with/by actinic light" compositions are also referred to as "photo-crosslinking" compositions. Similarly, for the purposes of the present invention, the expressions "resin that can be crosslinked by the action of a photoinitiator that can be activated with actinic light" and the expression "photocrosslinkable resin" are used as synonyms.

By "photoactivatable photoinitiator compound" is meant, for the purposes of the present invention, a chemical compound which, following irradiation with an actinic light source, allows the activation and propagation of polymerization reactions by generating reactive species or generators of crosslinkers (Lewis acids, superbases, etc.).

By "booster/co-hardener compound" is meant a hardener which, in the case of the present invention, optionally represents the possibility of being added to the composition i) effectively transforming it into a two-component system which cooperatively contributes to the cross-linking of the composition, in particular to the crosslinking of the non-photocrosslinkable part of the composition and/or to the crosslinking of different functional groups of the same photocrosslinkable polymer.

However, the system can also be correctly used as the composition described in step i) without the addition of the booster and/or co-hardener in order to obtain basic standard mechanical and/or chemical resistances, sufficient for use as an *in situ* rehabilitation of pipelines obtaining, due to the dual nature of the present functional groups, a lower shrinkage volume and a lower thermal peak during crosslinking.

By "semi-latent hardener" is meant a hardener which, in the case of the present invention, represents the second booster component of the bi-component composition obtained in step ii) and which is activated at room temperature following mixing with the first component of the bi-component composition or is activated by the temperature reached by the mass during the initial cross-linking and which has a relatively long pot-life time, which varies from over 12 hours to 60 or more days (at room temperature of about 20°C).

By "hardener at room temperature" is meant a hardener which, in the case of the present invention, represents the second booster component of the bi-component composition obtained in step ii) and which is activated at room temperature or at the temperature reached by the mass during crosslinking, following mixing with the first component and which has a relatively short pot-life time, ranging from a few minutes to 12 hours (at a temperature of about 20°C).

For the purposes of the present invention, the term "resin" is intended to comprise both polymers and monomers and oligomers.

The present invention relates to a method for the non-destructive *in situ* rehabilitation and/or repair of a pipeline comprising the steps of:
i) making available a composition comprising:
   a) at least one resin selected from the group comprising an acrylic, methacrylic, unsaturated polyester, polyester (meth)acrylate, epoxy (meth)acrylate, polyurea (meth)acrylate, bisphenol (meth)acrylate, vinyl, vinylester, vinylether, polyether (meth)acrylate resin and a combination thereof;
   b) at least one resin selected from the group comprising an epoxy, oxirane, oxetane, polyurethane, cycloaliphatic epoxy resin, and a combination thereof;
   c) at least one photoinitiator compound which can be photoactivated by irradiation with an actinic light source having a wavelength between 100 and 600 nm;
ii) when maximum performance providing higher mechanical and/or chemical strength than the said first predetermined basic level of mechanical and/or chemical strength is required the method further comprising the step of adding to the composition of step (i):d) at least one co-hardener compound selected from the group comprising a semi-latent co-hardener, a room temperature co-hardener and a combination thereof, whose cross-linking action does not depend on the presence and/or persistence of irradiation with a source of actinic light having a wavelength between 100 and 600 nm;
iii) impregnating a substrate with the composition of step i), or with the composition of step ii);
iv) inserting the impregnated substrate inside the pipeline to be rehabilitated and/or repaired;
v) expanding or extruding, preferably by means of the inversion technique, said substrate against the internal surfaces of the pipeline by the application of a suitable air flow,
vi) activating the at least one photoinitiator included in the composition by irradiation with an actinic light source having a wavelength between 100 and 600 nm;
vii) removing the pressured air flow application, preferably after a waiting time of between 1 and 60 minutes, more preferably between 10 and 40 minutes.

According to an embodiment of the invention, step iv) is performed immediately after or in a relatively short period of time after step ii), preferably said period of time being less than 5 minutes, more preferably less than 1 minute, even more preferably less than 30 seconds.

According to an embodiment, the composition of the invention can optionally comprise at least one additive added to the composition obtained in step i) and/or to the composition obtained in step ii); said additive being preferably selected from the group comprising: a sensitizer, accelerator, a diluent, a pigment, a dye, a fire retardant, a thixotropic agent, an adhesion promoter, a thixotroping agent, a plasticizer, an extender, a filler, a reinforcing agent, preferably selected from a mineral silicate, mica, quartz powder, hydrated alumina, glass, bentonite, wollastonite, kaolin, silica aerogel; a flow control agent, preferably selected from a silicone, a wax and a stearate.

According to a preferred embodiment of the invention, the at least one photoinitiator compound c) is present in an amount of between 0.00001 and 20% by weight, preferably between 0.01 and 5% by weight, more preferably between 0.01 and 3% by weight referred to the total weight of the composition.

According to an embodiment of the invention, said at least one photoinitiator compound c) is a radical photoinitiator. Preferably said radical photoinitiator is a type I, II or III radical photoinitiator selected from the group comprising: α-aminoketone, acylophosphine oxide, preferably 2,4,6-trimethylbenzolyl diphenyl phosphine oxide and bis-(2,6-dimethoxybenzoyl)-2,4,4-trimethylphenylphosphine, phenyl glyoxylate, methyl phenyl glyoxylate, benzophenone, thioxanthone, isopropylthioxanthone (ITX), camphorquinone, 1-chloro-4-propoxythioxanthone (CPTX), titanocene, α-hydroxyketone, Michler's ketone, α,α-dimethoxy-2-phenylacetophenone (DMPA), α-diethoxy acetophenone, α-hydroxy-α,α-alkyl acetophenone, preferably α-hydroxy-α,α-dimethyl acetophenone, 1-benzoylcyclohexanol, 3-ketocoumarin, and a combination thereof.

According to another embodiment, said at least one photoinitiator compound c) is a cationic photoinitiator. Preferably said cationic photoinitiator is selected from the group comprising: a triarylsulfonium salt, a diaryl iodonium salt, an iodonium salt or a sulfonium salt of SbF6-, PF6- or SO3CF3-, preferably 4-thiophenyl phenyl diphenyl sulfonium hexafluoroantimoniate and triphenylsulfonium hexafluorophosphate; and a combination thereof.

According to another embodiment, said at least one photoinitiator compound c) is an anionic photoinitiator.

According to an embodiment of the invention, said at least one resin of point a) is selected from the group comprising: diethylene glycol di(meth)acrylate, triethylene glycol di(meth)acrylate, tetraethylene glycol di(meth)acrylate, dipropylene glycol di(meth) acrylate, di-(pentamethylene glycol) di(meth)acrylate, tetraethylene diglycerol di(meth)acrylate, diglycerol tetra(meth)acrylate, tetramethylene di(meth)acrylate, ethylene di(meth)acrylate, neopentyl glycol di(meth)acrylate, trimethylol propane tri(meth)acrylate, (meth)acrylic esters of ethoxylated bisphenol A, epoxy (meth)acrylate monomers or oligomers (i.e., the reaction products of epoxy compounds or prepolymers with acrylic or methacrylic acids), urethane (meth)acrylate polymers, polyether (meth)acrylate oligomers, polyester (meth)acrylate oligomers, and a combination thereof.

Preferably, said at least one resin of point a) is selected from the group comprising: triethylene glycol di(meth)acrylate, polyethylene glycol di(meth)acrylate, epoxy (meth)acrylate monomers or oligomers, urethane (meth)acrylate polymers and a combination thereof.

According to an embodiment of the invention, said at least one resin of point b) is selected from the group comprising: substituted or unsubstituted aliphatic, cycloaliphatic, aromatic and/or heterocyclic polyepoxides such as for instance glycidyl esters, glycidyl ethers, glycidylamines, epoxidized olefins, epoxidized oils and a combination thereof.

Preferably, in the embodiment wherein said polyepoxides are substituted, they are substituted with substituents selected from: halogen and hydroxyl.

According to an embodiment of the invention, the preferred polyepoxides are glycidyl polyethers having epoxy equivalent weights ranging from 175-4000, preferably 175-1200, more preferably 175-700. Said glycidyl polyethers are preferably aromatic and are formed by reacting an epihalohydrin, preferably epichlorohydrin with mononuclear or polynuclear phenols such as for instance 4,4'-isopropylidenediphenol (bisphenol A), 4,4'-isopropylidenebis (2,6-dibromophenol), 1,1,3-Tris (p-hydroxyphenyl)propane, 1,1-bis (4-hydroxyphenyl) ethane, 1,1,2,2-tetra (p-hydroxyphenyl) ethane, bis-(4-hydroxyphenyl) methane, 4,4'-Dihydroxydiphenyl sulfone, 2,2-bis-(4-hydroxyphenyl)-propane, 2,2-bis-(3,5-dibromo-4-hydroxyphenyl)-propane, hydroquinone, resorcinol, dihydroxybiphenyl, dihydroxynaphthalene, phenolformaldehyde novolac, p-aminophenol and o-cresolformaldehyde novolac.

According to one embodiment, said at least one resin of point b) is selected from: polyglycidyl ethers or poly-(β-methylglycidyl) ethers derived from acyclic or cycloaliphatic alcohols, said acyclic alcohols being preferably selected from ethylene glycol, diethylene glycol, higher poly-(oxyethylene) glycols, propane-1,2-diol, poly-(oxypropylene) glycols, propane-1,3-diol, butane-1,4-diol, poly-(oxytetramethylene) glycols, pentane-1,5-diol, hexane-1,6-diol, hexane-2,4,6-triol, glycerol, 1,1,1-trimethylolpropane, pentaerythritol, sorbitol and polyepichlorohydrines; said cycloaliphatic alcohols preferably being selected from 1,4-cyclohexanedimethanol, bis-(4-hydroxycyclohexyl)-methane, 2,2-bis-(4-hydroxycyclohexyl)-propane, N,N-bis-(2-hydroxyethyl)-aniline and p,p'-bis-(2-hydroxyethylamino)-diphenylmethane.

According to an embodiment of the invention, said at least one resin of point b) is a cycloaliphatic epoxy resin selected from the group comprising: bis-(2,3-epoxycyclopentyl) ether, 2,3-epoxycyclopentyl glycidyl ether, 1,2-bis-(2,3-epoxycyclopentyloxy)-ethane, 3,4-epoxycyclohexylmethyl 3',4'-epoxycyclohexanecarboxylate and a combination thereof. Said at least one resin of point b) is preferably selected from the group comprising: bisphenol A diglycidyl ether (DGEBA), bisphenol F diglycidyl ether (DGBF), epoxy cresol novolac, bis-(2,3-epoxycyclopentyl) ether, 2,3-epoxycyclopentyl glycidyl ether, 1,2-bis-(2,3-epoxycyclopentyloxy)-ethane, 3,4-epoxycyclohexylmethyl 3',4'-epoxycyclohexanecarboxylate.

According to one embodiment, said at least one booster/co-hardener compound d) is a semi-latent co-hardener. Preferably, said semi-latent co-hardener is selected from the group comprising: imidazoles and derivatives and complexes of imidazole metal salts, hydrazides of carboxylic acids, triazine derivatives, melamine derivatives, organic acid anhydrides, polycarboxylic acids, carboxylic acid anhydrides, solid amines and solid adducts of amines, guanidines, aromatic polyamines and a combination thereof.

More preferably said semi-latent co-hardener is selected from the group comprising: 1-(2-cyanoethyl)-2-ethyl-4-methylimidazole, nadic anhydride, adipic acid dihydrazide, isophthalic acid dihydrazide, anthranilic acid hydrazide, 2-phenyl-4,6-diamino-s-triazine (benzoguanamine), 2-lauryl-4,6-diamino-s-triazine (lauroguanamine), phthalic acid, isophthalic acid, terephthalic acid, hexamethylenetetramine, 1,3 diaminobenzene, 4,4'-methylenedianiline and a combination thereof and generally any other hardener used to crosslink the oxirane functional groups characteristic of epoxy resins in a time exceeding 12 hours at 20°C.

According to a preferred embodiment of the invention, when said at least one photoinitiator compound c) is a radical photoinitiator, said at least one co-hardening compound d) is a co-hardening compound at room temperature selected from the group comprising:
aliphatic polyamines, cycloaliphatic or heterocyclic polyamines, ethylenediamines, primary, secondary polyamines and tertiary amines, polyamides, and their polyamine and polyamide adducts, quaternary ammonium salts, organic and inorganic acids, polycarboxylic acids, polymercaptans, imidazole derivatives such as organic, complex and adducts and generally any other hardener used to crosslink the oxirane functional groups characteristic of epoxy resins.

Examples consist of those contained in the following list which is to be considered incomplete and not exhaustive of the categories and in which the following are mentioned:
N-(2-Aminoethyl)ethylenediamine3-Aza-1,5-pentanediamineBis (DETA),
3,6 Diazaoctane-1,8 diamine (TETA), ISOPHORONE DIAMINE (IPD) 4,4'-Methylenedicyclohexylamine (PACM), Polyetheramine, Trimethylhexamethylenediamine (TMD), bis-(4-aminophenyl)-methane, aniline, 3,3'-Dimethyl-4,4'-diaminodicyclohexylmethane, formaldehyde, benzylamine, n-octylamine, propane-1,3-diamine, 2,2-dimethyl-1,3-propanediamine, hexamethylenediamine, piperidine, triethylenetriamine, bis-(3-aminopropyl)-amine, N,N-bis-(3-aminopropyl)-methylamine, aminoethylpiperazine (AEP) triethylenetetramine, tetraethylenepentamine, pentaethylene, 2,2,4-trimethylhexane-1,6-diamine, m-xylylenediamine (MXDA), 1,4-diaminocyclohexane, bis-(4-aminocyclohexyl)-methane, bis-(4-amino-3-trimethyl)-cyclohexylamine, polyaminoimidazolines, polyaminoamides, polyoxyalkyleneamines, pyromellitic dianhydride (PMDA), nadic methyl anhydride (NMA), hexahydrophthalic anhydride (HHPA), chloroendic anhydride, phthalic anhydride, dodecyl succinic anhydride (DDSA), Lewis acids, preferably BCl3, trifluoride complexes, tin chloride trifluoride boron monoethylamine (BF3-MEA), imidazoles, preferably 2-ethyl-4-methyl-imidazole (EMI), tris-2,4,6-dimethylaminomethyl phenol, tris-(dimethylaminomethyl)phenol, benzyldimethylamine (BDMA), triethanolamine, N,N-dimethyldipropylenetriamine (DMDPTA), amino-n-propyldiethanolamine (APDEA), triphenylphosphine (TPP), polymercaptans, polysulfides, oxalic acid, succinic acid, glutaric acid, adipic acid, sulfonic acid, pimelic acid, suberic acid, azelaic acid, dimerized or trimerized linoleic acid, tetrahydrophthalic acid, 4-methyltetrahydrophthalic acid, 30-hexahydrophthalic acid, 4-methylhexahydrophthalic acid, phthalic acid, isophthalic acid, terephthalic acid, and a combination thereof.

According to a preferred embodiment of the invention, only when said at least one photoinitiator compound c) is a cationic or anionic photoinitiator acting on the oxirane moiety, said at least one booster/co-hardener compound d) is a co-hardener compound selected for acting on the radical moiety in the group comprising: azonitriles, alkyl peroxides, acyl peroxides, hydroperoxides, ketone peroxides, peresters, peroxide carbonates, azo compounds, and a combination thereof.

Preferably, said co-hardener is selected from the group comprising: azobisisobutyronitrile, phenyl-azo-triphenylmethane, t-butyl peroxide, benzoyl peroxide, cumene hydroperoxide, t-butyl peracetate, benzenesulfonyl azide, and a combination thereof.

Preferably, said at least one co-hardening compound d) is activated independently or is activated indirectly by irradiation with an actinic light source of step v).

Preferably, said at least one booster and/or co-hardener compound d) is activated subsequently or simultaneously with the at least one photoinitiator, even more preferably subsequently.

Without wishing to be bound by a specific theory, the Applicant has found that the use of said at least one resin a) (which is a resin photo-crosslinkable by actinic light, in particular by the action of said at least one photoinitiator c)) and of said at least one resin b) (which is a resin cross-linkable by the action of at least one co-hardening compound d)) allows to carry out the hardening of the composition in two distinct and/or alternative steps being able to decrease the exothermy of the system, the volume shrinkage and contain the thermal peak during the cross-linking process.

Even the use of a resin which possesses both separate functional groups, albeit within the same molecule, used in substitution or in mixture with said resins a) and b), when these functional groups are one crosslinkable by actinic light, in particular by the action of said at least one photoinitiator c), and the other crosslinkable by means of a mechanism substantially independent of exposure to actinic light, the hardening of the composition occurs in two distinct steps managing to decrease the exothermy of the system, volumetric shrinkage and to contain the thermal peak during the cross-linking process, or in two alternative steps.

The Applicant has also verified that due to the simultaneous presence of functional groups with different crosslinking mechanisms of said at least one resin a) (which is a resin photo-crosslinkable by actinic light, in particular by the action of said at least one photoinitiator c)) and of said at least one resin b) during the cross-linking, both in the presence of the co-hardening compound and in its absence, there is a considerable decrease in the volume shrinkage after the cross-linking and a hardened sheath is obtained, completely matching the surface of the pipe to be rehabilitated without the creation of empty interstices created by the volume shrinkage of the binder which can create inefficiency of the hermetic seal of the rehabilitation.

The Applicant has found that thanks to the presence of said at least one resin a) and of said at least one photoinitiator compound which can be photoactivated by actinic light c) comprised within the composition, following irradiation with an actinic light source, it is possible to obtain a fast crosslinking of the photo-crosslinkable composition and, consequently, hardening of the sheath impregnated with said composition, preferably in a time comprised between 1 and 60 minutes, more preferably between 5 and 20 minutes and furthermore, that this first hardening (which mainly affects the photo-crosslinkable part of the composition), is however sufficient to ensure adequate mechanical, thermal and chemical resistances for the intended use of the sheath impregnated with the composition of the invention in the relining sector, thus allowing the pipeline to be put back into service after a relatively short waiting time, preferably between 1 and 60 minutes, more preferably between 10 and 40 minutes (step vii).

When instead, due to the characteristics of the intervention, for instance pipes intended for the passage of hydrocarbons or particularly corrosive chemical agents, or pipes that have a high number of bends or are very dirty, with impurities present that could interfere with the correct degree of actinic radiation, a booster and/or co-hardener can be added which, thanks to the presence of at least one resin b), crosslinkable by the action of said at least one booster compound and/or co-hardener d), or with a crosslinking mechanism which does not substantially depend on the presence and/or persistence of irradiation with an actinic light source, the degree of cross-linking and the density of the cross-linking of the composition will increase, and will be completed in a subsequent period of time ranging from a few hours to a few weeks depending on the nature of said at least one booster and/or co-hardener compound d) added in step ii).

Without wanting to be bound by a specific theory, the Applicant has nevertheless found that this subsequent completion of the crosslinking (which mainly affects the non-photocrosslinkable part of the composition) also occurs once the pipeline is put back into service, i.e. during use of the pipeline itself (even in the presence of water inside), and allows to obtain a greater degree of cross-linking and, therefore, an increase in the mechanical characteristics such as for instance an increase in stiffness, an increase in chemical and thermomechanical resistance with respect to the use of the composition described in step i) as such without adding the booster and/or co-hardener.

According to one embodiment, said actinic light source of step v) is selected from: a broad spectrum UV lamp, a visible light lamp, a UV LED, a visible LED and a combination thereof.

According to an embodiment of the invention, said substrate is a sheath made of a material selected from: glass fiber, non-woven fabric, unidirectional or multidirectional non-woven fabric, polymeric felt, and a combination thereof.

The present invention also relates to a kit for the non-destructive *in situ* rehabilitation and/or repair of a pipeline according to the method of the invention as previously described.

This kit comprises:
- a first container comprising the composition described in said step i) of the method according to the present invention;
- a second optional container comprising said at least one co-hardener compound d) selected from the group comprising a semi-latent co-hardener, a room temperature co-hardener and a combination thereof as described in said step ii) of the method according to the present invention;
- a substrate suitable to be impregnated with said composition as described in said step iii) or to be impregnated with the composition as described in said step iv) of the method according to the present invention and suitable to be inserted inside a pipeline to be rehabilitated and/or repaired; said composition as described in point i) or the composition resulting from mixing the contents of the first container with the contents of the second container described in point ii); and eventually
- an actinic light source having a wavelength between 100 and 600 nm and an air flow generator pressure adjustable, preferably adjustable to a constant pressure value.

According to a particularly preferred embodiment of the invention, said substrate is a sheath made of a material selected from: glass fiber, non-woven fabric, unidirectional or multidirectional non-woven fabric, polymeric felt, and a combination thereof.

### EXAMPLES

A sheath made of polyester felt (dimensions din=100) was impregnated with the composition formulated according to the present invention described in point iii) then used in basic mode without adding the booster and/or co-hardener and was extroverted inside a polypropylene pipe taken as a model of a standard pipeline. (M1 sample)

A second sheath in polyester felt (dimensions din=100) was impregnated with a composition formulated according to the present invention described in point iv) then with the addition of the booster and/or co-hardener (Sample M1+ Booster)

The photoinitiator comprised in both compositions was activated by irradiation with a broad spectrum UV lamp in order to initiate crosslinking.

The sheaths impregnated with the compositions (hardened) were extracted and separated from the polypropylene pipe in order to submit them to the technical resistance tests after 7 days. The sheath sample impregnated with the mixture without booster/co-hardener reported the following data in Table 1.

**Table 1**

| Test | Bending (mm) | Bending stress (Mpa) | Bending deformation (%) | Bending Modulus (Mpa) |
|---|---|---|---|---|
| Sample M1 | 8.23 | 30 | 4.54 | 1902 |

The results obtained are to be compared with the hardened sheath impregnated with the composition wherein the booster/co-hardener was added in a mixture immediately before the extroversion, the results of the technical resistance tests after 7 days shown in Table 2.

**Table 2**

| Test | Bending (mm) | Bending stress (Mpa) | Bending deformation (%) | Bending Modulus (Mpa) |
|---|---|---|---|---|
| Sample M1 + Booster | 4.78 | 36 | 4.25 | 3187 |

The comparison between the two tests indicates a high increase in the elastic modulus, that means a crosslinking density increased by the use of the booster/co-hardener from which derives a high additional strength achieved by the composition which increases the final mechanical strengths of the sample.

### EXAMPLE OF SHRINKING DECREASE

A polyester felt sheath (dimensions din=100) was impregnated with the composition formulated according to the present invention and was extroverted inside a polypropylene pipe taken as a model of a standard pipeline. exA sample.

A second polyester felt sheath (dimensions din=100) was impregnated with a composition representative of the prior art obtained using the whole resinous part having only photoactivatable functional groups and in particular with a vinylester composition diluted with methacrylic reactive diluents dipropylene glycol diacrylate. exB sample.

The photoinitiator comprised in both compositions was activated by irradiation with a 600 watt LED UV lamp in order to start cross-linking.

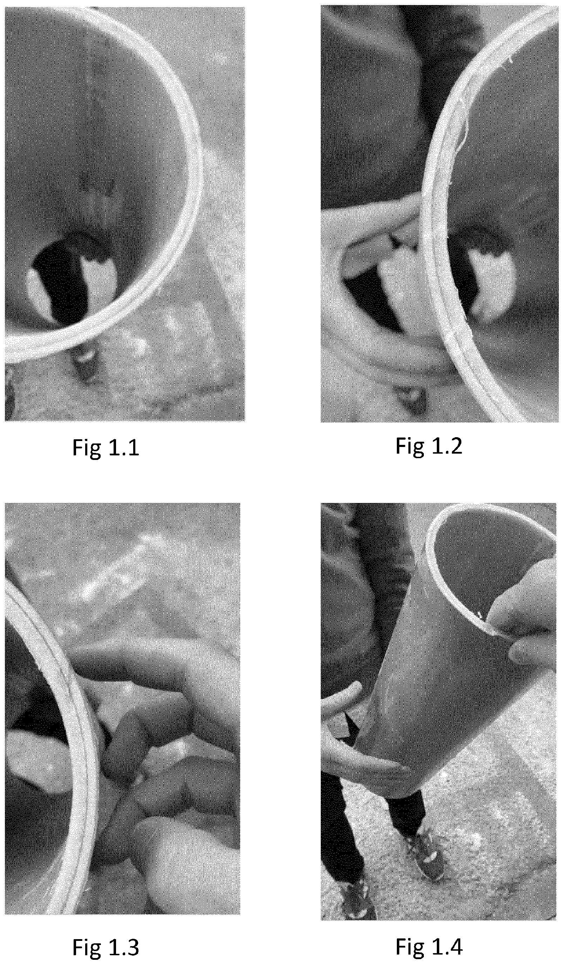

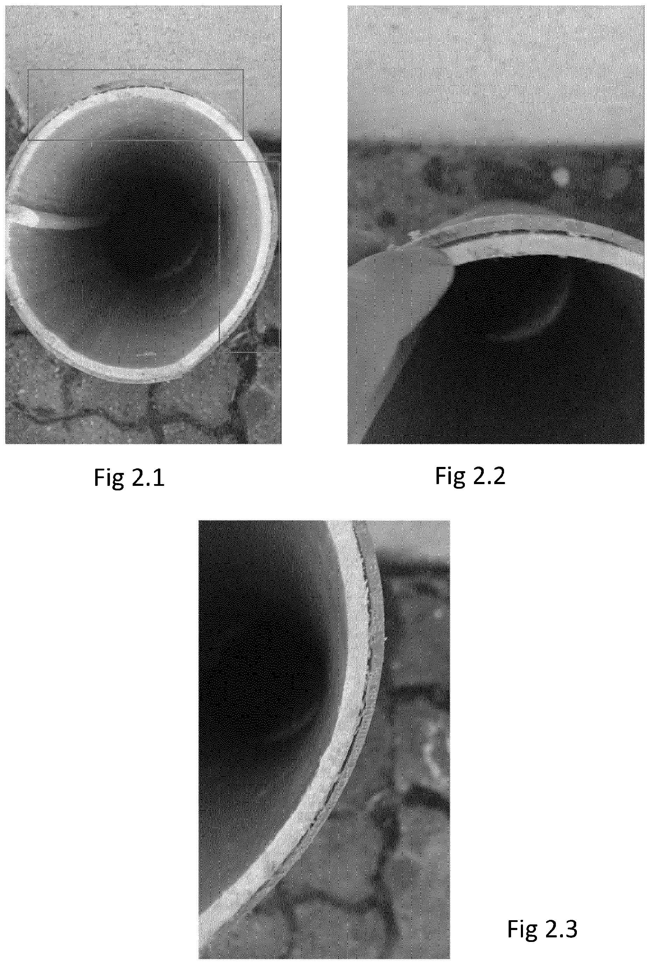

After cooling, the pipes were cut and the adhesion between the cross-linked sheath and the polypropylene pipe was evaluated, which can be seen in the series of photos in figures 1.1, 1.2, 1.3 of the sample exA pictures which highlight the perfect adhesion between the surfaces of the hardened sheath and the pipe to be rehabilitated, the picture in figure 1.4 shows how it is not possible, manually, to extract the hardened sheath from inside the pipe due to the almost total adhesion between the surfaces, while on the contrary the series of pictures of the figures 2.1, 2.2, 2.3 refers to the comparison sample exB where two areas are highlighted where the comparison sample, due to shrinkage, does not match the pipe perfectly and the formation of more than one interstitial space is highlighted (pictures 2.2 and 2.3 for detail) which could allow water to flow between the old pipe to be rehabilitated and the new pipe represented by the hardened sheath.

## Claims

1. Method for non-destructive in-situ rehabilitation and/or repair of a pipeline comprising the steps of:
(i) providing a composition, usable to obtain first predetermined basic level of mechanical and/or chemical strength comprising:
(a) at least one resin selected from the group comprising an acrylic, methacrylic, unsaturated polyester, polyester (meth)acrylate, epoxy (meth)acrylate, polyurea (meth)acrylate, bisphenol (meth)acrylilate, vinyl, vinylester, vinylether, polyether (meth)acrylate resin, and a combination thereof;
(b) at least one resin selected from the group comprising an epoxy, oxirane, oxetane, cycloaliphatic epoxy and a combination thereof;
(c) at least one photoinitiator compound, which is photoactivatable by irradiation with an actinic light source in the wavelength range of 100 to 600 nm;
(ii) when maximum performance providing higher mechanical and/or chemical strength than the said first predetermined basic level of mechanical and/or chemical strength is required the method further comprising the step of adding to the composition of step (i):
(d) at least one booster/co-hardener compound selected from the group comprising a semi-latent co-hardener, a room temperature co-hardener and/or a combination thereof, the cross-linking action of which is not dependent on the presence and/or persistence of irradiation with an actinic light source having a wavelength between 100 and 600 nm;
(iii) impregnating a substrate with the composition of step (i) and when it is sufficient to achieve said first predetermined basic level of mechanical and/or chemical strength, which basic level has mechanical and/or chemical features of the composition of step (ii) that are less than a second predetermined maximum level of said mechanical and/or chemical strength;
(iv) impregnating a substrate with the composition of step (ii) when it is necessary to achieve said second level of said mechanical and/or chemical strength by booster action;
(v) placing the impregnated substrate within the pipeline to be rehabilitated and/or repaired;
(vi) expanding or extruding, preferably by means of the inversion technique, said substrate on the inner surfaces of the pipeline by application of an air stream, preferably by application of a constant pressure air stream;
(vii) activating the at least one photoinitiator included in the composition by irradiation with an actinic light source having a wavelength between 100 and 600 nm
(viii) removing the application of the pressurised air stream, preferably after a waiting time of between 1 and 60 minutes, more preferably between 10 and 40 minutes.

2. The method according to claim 1, wherein the resins a) and b) both comprise a single resin possessing two different sets of functional groups positioned on the same molecule, said functional groups being respectively one of a cross-linkable type by actinic light, in particular by action of said at least one photoinitiator c) and the other of the cross-linkable type by a mechanism substantially independent of exposure to actinic light, said functional groups being separately activatable and cross-linkable in separate steps by means of different mechanisms one of said mechanisms comprising the action of the photoinitiator by exposure to actinic light and the other of said mechanisms comprising hardening by means of the booster and/or the co-initiator d).

3. The method according to claim 1 or 2, wherein the at least one photoinitiator compound c) is present in an amount of between 0.00001 and 20% by weight, preferably between 0.01 and 5% by weight, more preferably between 0.01 and 3% by weight referred to the total weight of the composition.

4. The method according to one or more of the preceding claims, wherein said at least one photoinitiator compound is selected from the group comprising:
a radicalic, cationic, anionic photoinitiator and a combination thereof;
said radical photoinitiator being preferably a type I, II or III radical photoinitiator selected from: α-aminoketone, acylphosphine oxide, preferably 2,4,6-trimethylbenzolyl diphenyl phosphine oxide and bis-(2,6-dimethoxybenzoyl)-2,4,4-trimethylphenyl phosphine oxide, phenyl glyoxylate, methyl phenyl glyoxylate, benzophenone, thioxanthone, isopropylthioxanthone (ITX), camphorquinone, 1-chloro-4-propoxythioxanthone (CPTX) titanocene, α-hydroxyketone, Mishler's ketone, α,α-dimethoxy-2-phenylacetophenone (DMPA), α,α-diethoxy acetophenone, α-hydroxy-α,α-dimethyl acetophenone, preferably α-hydroxy-α,α-dimethyl acetophenone, 1-benzoyl cyclohexanol, 3-ketocoumarin, and a combination thereof;
said cationic photoinitiator being preferably selected from: a triaryl sulphonium salt, a diaryl iodonium salt, an iodonium salt or a sulphonium salt of SbF₆⁻, PF₆⁻ or SO₃CF₃⁻, preferably 4-thiophenyl phenyl diphenyl sulphonium hexafluoroantimonate, triphenyl sulphonium hexafluorophosphate, and a combination thereof.

5. The method according to any one of the preceding claims wherein said at least one resin a) is selected from: diethylene glycol di(meth)acrylate, triethylene glycol di(meth)acrylate, tetra ethylene glycol di(meth)acrylate, dipropylene glycol di(meth)acrylate, di-(pentamethylene glycol) di(meth)acrylate, tetraethylene diglycerol di(meth)acrylate, diglycerol tetra(methmeth)acrylate, tetramethylene di(meth)acrylate, ethylene di(meth)acrylate, methneopentyl glycol di(meth)acrylate, methpropane trimethylol tri(meth)acrylate, meth)acrylic esters of ethoxylated bisphenol A (meth, epoxy (meth)acrylate monomers or oligomers (i.e., reaction products of epoxy compounds or prepolymers with acrylic or methacrylic acids, some or all of which are (meth)acrylates), urethane (meth)acrylate polymers, polyether (meth)acrylate oligomers, polyester (meth)acrylate oligomers, epoxy resin from bisphenol A or F and epichlorohydrin subsequently acrylated or methacrylated, epoxy (meth)acrylates and partially or wholly (meth)acrylated oligomers, and a combination of all those described above.

6. The method according to any one of the preceding claims wherein said at least one resin b) is selected from: bisphenol A diglycidyl ether (DGEBA), bisphenol F diglycidyl ether (DGBF), epoxy cresol novolac, bis-(2,3-epoxycyclopentyl) ether, 2,3-epoxycyclopentyl glycidyl ether, 1,2-bis-(2,3-epoxycyclopentyloxy)-ethane, 3,4-epoxycyclohexylmethyl 3',4'-epoxycyclohexanecarboxylate.

7. The method according to any one of the preceding claims wherein is a room temperature booster and/or co-hardener compound selected from the group comprising: Aliphatic polyamines, cycloaliphatic or heterocyclic polyamines, ethylenediamines, primary, secondary and tertiary amines, polyamides, and polyamine and polyamide adducts thereof, quaternary ammonium salts, organic and inorganic acids, polycarboxylic acids, polymercaptans, imidazole derivatives such as organic salts, complexes and adducts and generally any other hardener used to cross-link the oxirane functional groups characteristic of epoxy resins at room temperature,
as an incomplete and non-exhaustive example of categories, the following are given
N-(2-Aminoethyl)ethylenediamine-3-Aza-1,5-pentanediamineBis (DETA),
3,6-diazaoctane-1,8-diamine (TETA), isophorone diamine (IPD),
4,4'-methylenedicyclohexylamine(PACM), Polyetheramine, Trimethylhexamethylenediamine (TMD), bis-(4-aminophenyl)-methane, aniline, 3,3'-Dimethyl-4,4'-diaminodicyclohexylmethane, 3-azapentane-1,5-diamine (DETA), 1,2-Diaminocyclohexane, Cyclohexanamine, Polyetheramine, Polyoxyalkyleneamine (D230 -D400), tertiary amines, formaldehyde, benzylamine, n-octylamine, propane-1,3-diamine, 2,2-dimethyl-1,3-propanediamine, hexamethylenediamine, piperidine, triethylenetriamine, bis-(3-aminopropyl)-amine, N,N-bis-(3-aminopropyl)-methylamine, aminoethylpiperazine (AEP) triethylenetetetramine, tetraethylenepentamine, pentaethylene, 2,2,4-trimethylhexane-1,6-diamine m-xylenediamine (MXDA), 1,4-diaminocyclohexane, bis-(4-aminocyclohexyl)-methane, bis-(4-amino-3-trimethylcyclohexylamine, polyaminoimidazolines, polyaminoamides, polyoxyalkyleneamines, pyromellitic dianhydride (PMDA), methyl nadalic anhydride (NMA), hexahydrophthalic anhydride (HHPA), chloroendic anhydride, phthalic anhydride, dodecyl succinic anhydride (DDSA), Lewis acids, preferably BCl₃, trifluoride complexes, tin chloride, boron trifluoride monoethylamine (BF₃-MEA) imidazoles, preferably 2,ethyl-4-methyl-imidazole (EMI), tris-2,4,6-dimethylaminomethyl phenol, tris-(dimethylaminomethyl)phenol, benzyldimethylamine (BDMA), 4-(4-aminophenyl)sulphonyl anilines triethanolamine, N,N-dimethyldipropylenetriamine (DMDPTA), amino-n-propyldiethanolamine (APDEA), triphenylphosphine (TPP), polymercaptans, polysulphides, oxalic acid, succinic acid, glutaric acid, adipic acid, sulphonic acid, pimelic acid, suberic acid, azelaic acid, dimerised or trimerised linoleic acid, tetrahydrophthalic acid, 4-methyltetrahydrophthalic acid, 30-hexahydrophthalic acid, 4-methylhexahydrophthalic acid, phthalic acid, isophthalic acid, terephthalic acid and any combination thereof, and generally any other hardener used to crosslink the oxirane functional groups characteristic of epoxy resins in less than 12 hours at 20°C.

8. The method according to any one of the preceding claims from 1 to 7 wherein said at least one booster and/or co-hardening compound d) is a semi-latent co-hardening compound selected from the group comprising: 1-(2-cyanoethyl)-2-ethyl-4-methylimidazole, imidazoles and their derivatives, organic anhydrides, nadic anhydride, adipic acid dihydrazide, isophthalic acid dihydrazide, anthranilic acid hydrazide, 2-phenyl-4,6-diamino-s-triazine (benzoguanamine), 2-lauryl-4,6-diamino-s-triazine (lauroguanamine), phthalic acid, isophthalic acid, terephthalic acid, hexamethylenetetramine, 1,3-diamino benzene, 4,4'-methylenedianiline and combinations thereof, aromatic polyamines, tertiary amines and generally any other hardener used to cross-link the characteristic oxirane functional groups of epoxy resins in more than 12 hours at 20°C up to several months.

9. The method according to any one of the preceding claims wherein said resin a) and said resin b) are used in a weight ratio of between 90:10 and 10:90, preferably between 70:30 and 30:70, more preferably between 80:20 and 20:80, more preferably between 85:15 and 15:85.

10. The method according to any one of the preceding claims wherein said resin a) and said resin b) are replaced by a resin having similar functional groups of both types in an overall numerical ratio of the different functional groups of 90:10 to 10:90, preferably between 70:30 and 30:70, more preferably between 80:20 and 20:80, more preferably between 85:15 and 15:85.

11. The method according to any one of the preceding claims wherein in combination with a cationic and/or anionic photoinitiator, said at least one booster and/or co-hardening compound d) is a co-hardening compound selected from the group consisting of: Azobisisobutyronitrile, phenyl-azo-triphenylmethane, organic peroxides, t-butyl peroxide, benzoyl peroxide, cumene hydroperoxide, t-butyl peracetate, benzene sulfonyl azide, and a combination thereof, and generally any other hardener capable of cross-linking by radical mechanism, in use to cross-link unsaturated (meta)acrylic, allyl, vinyl and polyether groups

12. The method according to any one of the preceding claims wherein said actinic light source is selected from: a broad spectrum UV lamp, a visible light lamp, a UV LED, a visible LED, and a combination thereof.

13. The method according to any one of the preceding claims wherein said substrate is a sheath made of a material selected from: glass fibre, non-woven fabric, unidirectional or multi-directional non-woven fabric, polymeric felt, and a combination thereof.

14. A kit for *in situ* non-destructive rehabilitation and/or repair of a pipeline according to the method of claims 1-13, comprising:
- a first container comprising the composition of step i) ;
- an optional second container comprising the at least one co-hardening compound d) as described in step ii);
- a substrate suitable for being impregnated with said composition as described in step ii) or optionally by the composition described in step iii) and suitable for being inserted within a pipeline to be rehabilitated and/or repaired, said composition may result from mixing the contents of the first container with the contents of the second container; and optionally
- an actinic light source with a wavelength between 100 and 600 nm and a generator of an adjustable pressure air stream.

15. A kit for *in situ* non-destructive rehabilitation and/or repair of a pipeline according to claim 14, comprising a composition according to step i) and wherein said at least one resin selected from the group mentioned in b) assumes the function of an inert filler within said composition resulting in a decrease in volumetric shrinkage, and/or a limitation of exothermy and/or thermal peak.

16. A composition for *in situ* non-destructive rehabilitation and/or repair of a pipeline according to the method of the preceding claims, **characterised in that** said composition comprises:
(a) at least one resin selected from the group comprising an acrylic, methacrylic, unsaturated polyester, polyester (meta)acrylate, epoxy (meta)acrylate, polyurea (meta)acrylate, bisphenolic (meta)acrylic, vinyl, vinylester, polyether (meta)acrylate, and a combination thereof;
(b) at least one resin selected from the group comprising an epoxy, oxirane, oxetane, cycloaliphatic epoxy and a combination thereof;
(c) at least one photoinitiator compound, which is photoactivatable by irradiation with an actinic light source having a wavelength between 100 nm and 600 nm, wherein said components (a) to (c) are pre-mixed with each other, and
that said at least one resin selected from the group of components (b) assumes the function of an inert filler within said composition resulting in a decrease of the volume shrinkage, and/or a limitation of the exotherm and/or the thermal peak.

17. A composition according to claim 16 in which said resin of (a) is present in a ratio of at least 40:60, up to 95:5, with the resin of group b.

18. A composition for non-destructive *in situ* rehabilitation and/or repair of a pipeline wherein said composition comprises:
(a) at least one resin selected from the group comprising an acrylic, methacrylic, unsaturated polyester, polyester (meta)acrylate, epoxy (meta)acrylate, polyurea (meta)acrylate, bisphenolic (meta)acrylic, vinyl, vinylester, vinylether, polyether (meta)acrylate resin, and a combination thereof;
(b) at least one resin selected from the group comprising an epoxy, oxirane, oxetane, cycloaliphatic epoxy and a combination thereof;
(c) at least one photoinitiator compound, which is photoactivatable by irradiation with an actinic light source having a wavelength between 100 and 600 nm, wherein said components (a) to (c) are pre-mixed with each other; and
d) at least one component consisting of a booster/co-hardening compound selected from the group comprising a semi-curing co-hardener, a room temperature co-hardener and/or a combination thereof, the crosslinking action of which is not dependent on the presence and/or persistence of irradiation with an actinic light source having a wavelength in the range of 100 to 600 nm, said component being mixable with the combination of said pre-mixed components a) to c).

19. A composition according to claim 18, **characterised by** having one or more of the properties of claims 1 to 14.
